# EUROPÄISCHE PATENTSCHRIFT

(11) **EP 1 619 215 B1**
(45) Veröffentlichungstag und Bekanntmachung des Hinweises auf die Patenterteilung: **25.06.2008**
(21) Anmeldenummer: 05014936.8
(22) Anmeldetag: 09.07.2005
(51) Int. Cl.: C08G 18/10, C08G 18/76, C08G 18/48

(54) **Niedrigviskose Polyurethan-Prepolymere auf Basis von 2,4'-MDI**
Polyurethane prepolymers with low viscosity based on 2,4'-MDI
Prépolymères de polyuréthanne à viscosité reduite à base de 2,4'-MDI

(30) Priorität: 23.07.2004 DE 102004035764
(43) Veröffentlichungstag der Anmeldung: 25.01.2006
(73) Patentinhaber: Bayer MaterialScience AG, 51368 Leverkusen (DE)
(72) Erfinder: Wintermantel, Matthias, Dr., 51061 Köln (DE); Meckel, Walter, Dr., 40627 Düsseldorf (DE); Matner, Mathias, Dr., 41464 Neuss (DE); Kraus, Harald, Dr., 51371 Leverkusen (DE); Kobelka, Frank, 51375 Leverkusen (DE)

(56) Entgegenhaltungen:
- EP-A- 1 153 997
- WO-A-03/033562
- GB-A- 1 126 094

## Beschreibung

Die vorliegende Erfindung betrifft niedrigviskose, monomerarme feuchtigkeitshärtende Dichtstoffe auf Basis von 2,4'-MDI-Prepolymeren, ein Verfahren zur Herstellung sowie ihre Verwendung.

Feuchtigkeitshärtende Dichtstoffe auf Polyurethanbasis enthalten neben Füllstoffen, Pigmenten und Verlaufshilfsmitteln im wesentlichen NCO-gruppenhaltige Polyurethanprepolymere, welche durch Reaktion mit Feuchtigkeit über Harnstoffgruppen vernetzen.

Von besonderem Interesse sind dabei heutzutage solche Prepolymere, welche eine möglichst niedrige Eigenviskosität aufweisen. Dadurch kann bei Herstellung, Weiterverarbeitung und/oder Applikation der PUR-Systeme auf die Zugabe von viskositätserniedrigenden Zusätzen wie Lösemittel ganz oder teilweise verzichtet werden, wodurch hohe VOC-Werte oder unvorteilhafte Materialeigenschaften durch im Polyurethan verbliebene Zusätze vermieden werden können.

Unabhängig von der Viskosität ist aus arbeitshygienischen Gründen generell ein geringer Restgehalt an monomeren Di- oder Triisocyanaten in Prepolymeren und darauf basierenden PUR-Systemen wünschenswert.

Aufgrund ihrer herausragenden Eigenschaften sind weichelastische, feuchtigkeitshärtende Dichtstoffe auf Polyurethanbasis von großer Bedeutung für Anwendungen im Automobilsektor sowie im Baubereich.

EP-B 0 425 694 beschreibt feuchtigkeitshärtende Dichtstoffe enthaltend polyetherbasierende PUR-Prepolymere. Als Isocyanatbaustein für diese Prepolymere werden allgemein aliphatische, cycloaliphatische und aromatische Polyisocyanate aufgeführt, wobei explizit jedoch nur Toluylendiisocyanat genannt und in den Ausführungsbeispielen verwendet wird. Aufgrund des relativ hohen Dampfdruckes von monomerem TDI (2,4-TDI: 1,3 · 10⁻² mbar @ 20°C; 2,6-TDI 2,0 · 10⁻² mbar @ 20°C) muss dieses nach Prepolymerherstellung gründlich entfernt werden. Dieser Schritt ist aus Kostengründen unerwünscht. Daher wird versucht TDI-basierte Systeme zunehmend gegen MDI-basierte Analoga zu ersetzen. Diese weisen neben dem niedrigeren MDI-Dampfdruck von 4,0 · 10⁻⁶ mbar @ 20°C den Vorteil einer deutlich schnelleren Aushärtungsgeschwindigkeit auf.

In Bezug auf die Viskosität allerdings weisen die aus dem Stand der Technik bekannten 4,4'-MDI-basierten Prepolymere Nachteile gegenüber analog aufgebauten TDI-Systemen auf. So hat ein auf MDI basierendes Prepolymer mit 98 Gew.-% 4,4'-MDI eine Viskosität von 70 000 mPa·s bei 23°C während ein vergleichbares TDI-basiertes Prepolymer lediglich eine Viskosität von 11 000 mPa·s bei 23°C aufweist. Während eine Erhöhung des 2,4'-MDI-Anteils auf 25 Gew.-% keinen signifikanten Einfluss auf Viskosität und Reißdehnung hat, verschlechtern sich dagegen Zugfestigkeit, Spannungswert (100 % Modul) und Shore A-Härte (Lay et al, Polyurethane World Congr. Proc., 1991, Seite 319 ff).

Die EP-A 0 693 511 beschreibt NCO-gruppenhaltige Hotmeltsysteme, zu deren Herstellung MDI mit einem Anteil an 2,4'-Isomeren von mindestens 70 Gew.-%, bevorzugt mindestens 85 Gew.-%, verwendet wird. Als Hydroxykomponente können neben i) ester- und/oder ethergruppenhaltigen Polyolen einer mittleren Funktionalität von 1,95 - 2,2 auch höherfunktionelle Polyole mit verwendet werden. Bevorzugt werden in i) esterfunktionelle Polyole eingesetzt. Derartige Gruppierungen sind jedoch verseifungslabil, so dass sie sich für einen Einsatz im Dichtstoffbereich nicht eignen.

Aus WO 93/09158 sind Prepolymere bekannt, welche vorzugsweise als Isocyanatkomponente 2,4-TDI, MDI mit wenigstens 90 Gew.-% 2,4'-MDI und/oder IPDI enthalten. Die zum Aufbau eingesetzte Polyolkomponente hat eine Funktionalität von 2,05 - 2,5 und besteht aus Polyestern, Polyethern und/oder Polyetherestern mit Molekulargewichten von 200 - 6000 g/mol. Aus den Beispielen sind Prepolymere bekannt, welche aus einem MDI mit mehr als 92 Gew.-% 2,4'-MDI und polyetherbasierten Diolen und Triolen mit Molekulargewichten ≤ 1000 g/mol aufgebaut sind. Solche Prepolymere eignen sich aufgrund der relativ kurzkettigen Polyether nicht zum Einsatz zur Herstellung von elastischen Dichtstoffen aus einkomponentigen, feuchtigkeitshärtenden Formulierungen.

Aus WO 03/006521 und WO 03/033562 sind monomerenarme NCO-gruppenhaltige Prepolymere auf Basis von MDI mit 2,4'-MDI-Anteilen größer 97,5 Gew.-% bekannt. Als Polyole werden u.a. Polyetherdiole mit Molekulargewichten ≤ 2000 g/mol eingesetzt. Als Prepolymere werden bedingt durch die relativ kurzkettigen Polyole Produkte erhalten, welche bei Raumtemperatur fest oder extrem hochviskos (Scherviskositäten bei 23°C von > 100 000 mPa·s) sind und daher nicht ohne weiteres in bei Raumtemperatur applizierbaren, lösemittelarmen Dichtstoffen einsetzbar sind.

In WO 03/055929 werden NCO-gruppenhaltige Prepolymere beschrieben, die bevorzugt aus 2,4'-MDI mit Anteilen von 4,4'- und 2,2'-MDI von bevorzugt weniger als 1 Gew.-% und Polyolen erhalten werden. Als geeignete Polyole werden bevorzugt bei Raumtemperatur flüssige, amorphe oder kristalline Verbindungen mit 2 bzw. 3 OH-Gruppen pro Molekül und mittleren Molekulargewichten von 400 - 20 000 g/mol eingesetzt. In unspezifischen Listen werden in diesem Zusammenhang zahlreiche Polyether-, Polyester- und Polyacrylatpolyole genannt. Aus diesen Prepolymeren können unter anderem ein- und zweikomponentige Kleb-/Dichtstoffe hergestellt werden. Dazu werden diese mit hochmolekularen Polyisocyanaten vermischt eingesetzt. Diese hochmolekularen Polyisocyanate basieren ebenfalls auf 2,4'-MDI, enthalten aber Polyole mit Molekulargewichten von 60 - 2000 g/mol. Monomerenarme, niedrigviskose Dichtstoffe, die unter Feuchtigkeitseinwirkung aushärten und ausschließlich 2,4'-MDI Prepolymere basierend auf Polyetherdiolen mit zahlenmittleren Molekulargewichten > 2000 g/mol enthalten, werden nicht beschrieben.

WO 03/051951 offenbart ein Verfahren, bei dem zunächst ein unsymmetrisches Diisocyanat mit einem Polyol mit einem mittleren Molekulargewicht von 60 - 3000 g/mol zu einem NCO-funktionellen Prepolymer umgesetzt wird, welches anschließend mit mindestens einem weiteren Polyol zur Reaktion gebracht wird. Bevorzugt wird zur Prepolymerherstellung TDI, IPDI oder 2,4'-MDI eingesetzt. Als Polyole der ersten Stufe können sowohl niedermolekulare Alkohole mit 2 - 4 OH-Gruppen als auch Polyether-, Polyester oder Polyacrylatpolyole eingesetzt werden. Prepolymere oder Dichtstoffe, die ausschließlich auf Polyetherpolyolen mit zahlenmittleren Molekulargewichten ≥ 2000 g/mol und MDI mit einem Anteil an 2,4'-MDI von mehr als 95 Gew.-% basieren, werden nicht beschrieben.

Es wurde nun überraschenderweise gefunden, dass sich zur Herstellung feuchtigkeitshärtender Dichtstoffe mit Reißdehnungen der ausgehärteten Dichtstoffe nach DIN 53 504 von > 100 % geeignete carbonsäureestergruppenfreie MDI-basierte Prepolymere mit Scherviskositäten von < 100 000 mPa·s bei 23°C dann herstellen lassen, wenn für die Prepolymerherstellung als Isocyanat ein MDI-Typ mit wenigstens 95 Gew.-% 2,4'-MDI und als Polyol eine Polyetherpolyolmischung eingesetzt wird, die aus
» wenigstens einem Polyetherpolyol eines zahlenmittleren Molekulargewichts Mₙ von 2000 g/mol bis 20000 g/mol und einer mittleren OH-Funktionalität von 3 bis 8 und
» gegebenenfalls weiteren ganz besonders bevorzugt difunktionellen Polyetherpolyolen mit zahlenmittleren Molekulargewichten größer 2000 g/mol
besteht sowie mengenmäßig so zusammengesetzt ist, dass eine Gesamtfunktionalität bezogen auf OH-Gruppen von > 2 und ein zahlenmittleres Molekulargewicht Mₙ von 3000 bis 20000 g/mol resultiert.

Derartige Prepolymere bzw. feuchtigkeitshärtenden Dichtstoffe, welche solche Prepolymere enthalten, wurden im Stand der Technik bisher nicht beschrieben.

Die darauf basierten feuchtigkeitshärtenden Dichtstoffe weisen vergleichbare oder verbessertes Eigenschaftsprofil verglichen mit TDI-basierten Systemen des Standes der Technik auf.

Gegenstand der Erfindung ist daher ein Verfahren zur Herstellung von carbonsäureestergruppenfreien MDI-basierten Prepolymeren mit Scherviskositäten von < 100 000 mPa·s bei 23°C, bei dem
A) ein Isocyanat, welches ein MDI-Typ mit wenigstens 95 Gew.-% 2,4'-MDI mit
B) einer Polyetherpolyolmischung aus
   b1) wenigstens einem Polyetherpolyol eines zahlenmittleren Molekulargewichts Mₙ von 2000 bis 20000 g/mol und einer mittleren OH-Funktionalität von 3 bis 8 und
   b2) gegebenenfalls weiteren Polyetherpolyolen mit zahlenmittleren Molekulargewichten größer 2000 g/mol
umgesetzt wird und wobei der Anteil von b1) an B) wenigstens 30 Gew.-% beträgt und B) so aus b1) und b2) zusammengesetzt ist, dass eine Gesamtfunktionalität bezogen auf OH-Gruppen von > 2 und ein zahlenmittleres Molekulargewicht Mₙ von 3000 bis 20000 g/mol resultiert.

Ebenfalls sind die nach dem Verfahren erhältlichen Prepolymere sowie die daraus hergestellten Dicht- und/oder Klebstoffe, welche Reißdehnungen nach DIN 53 504 von > 100 % aufweisen, ein Gegenstand dieser Erfindung.

Bevorzugt wir das Verhältnis der Komponenten A) und B) zueinander so bemessen, dass das NCO/OH-Verhältnis unter 2,0 besonders bevorzugt von 1,4 - 1,9 liegt.

Bevorzugt wir das Verhältnis der Komponenten A) und B) zueinander so bemessen, dass die resultierenden Prepolymere einen NCO-Gehalt von kleiner 4 Gew.-% aufweisen.

Bevorzugt weist der als Isocyanat in A) eingesetzte MDI-Typ einen Gehalt an 2,4'-MDI von mindestens 97 Gew.-%, besonders bevorzugt mindestens 97,5 Gew.-% auf.

Bevorzugt weist der als Isocyanat in A) eingesetzte MDI-Typ einen Gehalt an 2,2'-MDI von höchstens 0,5 Gew.-%, besonders bevorzugt höchstens 0,25 Gew.-% auf.

Derartige Methylendiisocyanate mit einem Gehalt von 95 Gew.-% und mehr an 2,4'-MDI werden typischerweise durch Destillation oder Kristallisation aus der sogenannten Zweikernfraktion des technisch hergestellten MDI's gewonnen.

Die in B) eingesetzten Polyetherpolyole sind dem Fachmann aus der Polyurethanchemie an sich bekannt. Diese werden typischerweise ausgehend von niedermolekularen mehrfachfunktionellen OH- oder NH-funktionellen Verbindungen als Starter durch Umsetzung mit cyclischen Ethern oder Mischungen verschiedener cyclischer Ether erhalten. Als Katalysatoren werden dabei Basen wie KOH oder Doppelmetallcyanid-basierende Systeme verwendet. Hierzu geeignete Herstellungsverfahren sind dem Fachmann an sich beispielsweise aus US-B 6 486 361 oder L.E.St. Pierre, Polyethers Part I, Polyalkylene Oxide and other Polyethers, Editor: Norman G. Gaylord; High Polymers Vol. XIII; Interscience Publishers; Newark 1963; S. 130 ff. bekannt.

Geeignete Starter weisen bevorzugt 2 - 8, besonders bevorzugt 2 - 6 zur Polyaddition mit cyclischen Ethern befähigte Wasserstoffatome auf. Derartige Verbindungen sind beispielsweise Wasser, Ethylenglykol, 1,2- oder 1,3-Propylenglykol, 1,3-Butandiol, 1,4-Butandiol, 1,6-Hexandiol, Bisphenol-A, Neopentylglykol, Glycerin, Trimethylolpropan, Pentaerythrit, Sorbit.

Als cyclische Ether kommen Alkylenoxide wie Ethylenoxid, Propylenoxid, Butylenoxid, Epichlorhydrin oder Styroloxid oder Tetrahydrofuran in Betracht.

Bevorzugt werden in B) auf vorstehend genannten Startern basierende Polyether mit Propylenoxid-, Ethylenoxid- und/oder Tetrahydrofuran-Einheiten besonders bevorzugt mit Propylenoxid- und/oder Ethylenoxid-Einheiten verwendet.

Die Polyetherpolyole der Komponente b1) weisen bevorzugt zahlenmittlere Molekulargewichte von 2000 bis 15000 g/mol auf. Die bevorzugte mittlere OH-Funktionalität beträgt 3 - 6, besonders bevorzugt 3 - 4.

Die Polyetherpolyole der Komponente b2) weisen bevorzugt zahlenmittlere Molekulargewichte von 2000 bis 25000 g/mol und besonders bevorzugt von 2000 bis 18000 g/mol auf. Die bevorzugte mittlere OH-Funktionalität beträgt 2 bis 6, besonders bevorzugt 2 bis 4, ganz besonders bevorzugt 2.

Der Ethylenoxid-Anteil der Polyetherpolyole der Komponenten b1) und b2) beträgt 0 bis 25 Gew.-%, bevorzugt 0 bis 20 Gew.-% und besonders bevorzugt 0 bis 15 Gew.%.

Der Anteil der Komponente b1) an der Polyetherpolyolmischung B) beträgt mindestens 30 Gew.-%.

Die Herstellung der NCO-Endgruppen aufweisenden Polyurethanprepolymere erfolgt in aus der Polyurethanchemie bekannter Art und Weise.

Die Herstellung erfolgt bevorzugt in einem einstufigen Verfahren. Dabei werden die Polyole der Komponente B) einzeln oder als Mischung mit einem Überschuss der Isocyanatkomponente A) vermischt und die homogene Mischung bis zum Erhalt eines konstanten NCO-Wertes gerührt. Als Reaktionstemperatur werden 50°C bis 120°C, vorzugsweise 50°C bis 100°C gewählt. Bevorzugt sind beide Reaktionspartner wie auch das Reaktionsprodukt bei der gewählten Reaktionstemperatur flüssig, so dass auf die Verwendung zusätzlicher Lösemittel zur Homogenisierung und Viskositätserniedrigung der Reaktionsmischung verzichtet werden kann.

Die Herstellung kann aber auch in einem zweistufigen Prozess erfolgen. Dabei wird in einem ersten Schritt aus b1) und/oder b2) der Komponente B) und einem Überschuss der Isocyanatkomponente A) ein Vorprodukt hergestellt. Dabei werden die Reaktionspartner in homogener Mischung bis zum Erhalt eines konstanten NCO-Werts bei einer Temperatur von 50 °C bis 120 °C, bevorzugt bei einer Temperatur von 50°C bis 100°C gerührt. Dieses Vorprodukt weist einen hohen Gehalt an nicht reagiertem monomerem Diisocyanat auf. Dieses Vorprodukt wird dann in einem zweiten Reaktionsschritt mit den restlichen Polyolen der Komponente B) zum fertigen Dichtstoff-Prepolymeren umgesetzt. Dabei werden die Reaktionspartner in homogener Mischung bis zum Erhalt eines konstanten NCO-Werts bei einer Temperatur von 50°C bis 120°C, bevorzugt bei einer Temperatur von 50°C bis 100°C gerührt. Bevorzugt sind die Reaktionspartner wie auch die Reaktionsprodukte der beiden Stufen bei den gewählten Reaktionstemperaturen flüssig, so dass auf die Verwendung zusätzlicher Lösemittel zur Homogenisierung und Viskositätserniedrigung der Reaktionsmischungen verzichtet werden kann

Selbstverständlich kann die Herstellung der NCO-Endgruppen aufweisenden Polyurethanprepolymere auch kontinuierlich in einer Rührkesselkaskade oder geeigneten Mischaggregaten, wie beispielsweise schnelldrehenden Mischern nach dem Rotor-Stator-Prinzip, erfolgen. Der NCO-Gehalt wird nach einem in der Polyurethanchemie üblichen NCO-titrimetrischen Verfahren bestimmt.

Gegebenenfalls können falls gewünscht bei der Prepolymerherstellung auch Katalysatoren zur Beschleunigung der NCO/OH-Reaktion und/oder Lösemittel zugesetzt werden.

Als Katalysatoren sind die aus der Polyurethanchemie an sich bekannten aminischen oder metallorganischen Verbindungen geeignet.

Beispielsweise können folgende Verbindungen als Katalysatoren verwendet werden: Triethylamin, Tributylamin, Dimethylbenzylamin, Dicyclohexylmethylamin, Dimethylcyclohexylamin, N,N,N',N'-Tetramethyl-diamino-diethylether, Bis-(dimethylaminopropyl)harnstoff, N-Methyl- bzw. N-Ethylmorpholin, N,N'-Dimorpholinodiethylether (DMDEE), N-Cyclohexylmorpholin, N,N,N',N'-Tetramethylethylendiamin, N,N,N',N'-Tetramethylbutandiamin, N,N,N',N'-Tetramethylhexandiamin-1,6, Pentamethyldiethylentriamin, Dimethylpiperazin, N-Dimethylaminoethylpiperidin, 1,2-Dimethylimidazol, N-Hydroxypropylimidazol, 1-Azabicyclo-(2,2,0)-octan, 1,4-Diazabicyclo-(2,2,2)-octan (Dabco) und Alkanolaminverbindungen, wie Triethanolamin, Triisopropanolamin, N-Methyl- und N-Ethyl-diethanolamin, Dimethyl-aminoethanol, 2-(N,N-Dimethylaminoethoxy)ethanol, N,N',N-Tris-(dialkylaminoalkyl)hexahydrotriazine, z.B. N,N',N-Tris-(dimethylaminopropyl)-s-hexahydrotriazin, Eisen(II)-chlorid, Zinkchlorid, Bleioctoat und vorzugsweise Zinnsalze, wie Zinndioctoat, Zinndiethylhexoat, Dibuthylzinndilaurat und/oder Dibutyldilaurylzinnmercaptid, 2,3-Dimethyl-3,4,5,6-tetrahydropyrimidin, Tetraalkylammoniumhydroxide, wie Tetramethylammoniumhydroxid, Alkalihydroxide, wie Natriumhydroxid, Alkalialkoholate, wie Natriummethylat und Kaliumisopropylat und/oder Alkalisalze von langkettigen Fettsäuren mit 10 bis 20 Kohlenstoffatomen und gegebenenfalls seitenständigen OH-Gruppen. Weiterhin haben sich als Katalysatoren Ti-Verbindungen, insbesondere Ti(IV)-O-Alkylverbindungen, mit Alkylgruppen wie Methyl, Ethyl, n-Propyl, Isopropyl, n-Butyl, Isobutyl, tert.-Butyl, n-Penty, 2-Pentyl, 3-Pentyl, bevorzugt Ethyl, n-Propyl, Isopropyl, n-Butyl, Isobutyl, tert.-Butyl und besonders bevorzugt Ti(IV)butylat, bewährt.

Ebenso eignen sich z.B. die metallorganischen Verbindungen des Zinns, Bleis, Eisens, Titans, Wismuts oder Zirkoniums, wie Tetraisopropyltitanat, Blei-Phenyl-Ethyl-Dithiocarbaminat, Zinn(II)salze von Carbonsäuren, z.B. Zinn-II-acetat, -ethylhexoat und -diethylhexoat. Eine weitere Verbindungsklasse stellen die Dialkyl-Zinn(IV)-Carboxylate dar. Die Carbonsäuren haben 2, vorzugsweise wenigstens 10, insbesondere 14 bis 32 C-Atome. Es können auch Dicarbonsäuren eingesetzt werden. Als Säuren seien ausdrücklich genannt: Adipinsäure, Maleinsäure, Fumarsäure, Malonsäure, Bernsteinsäure, Pimelinsäure, Terephthalsäure, Phenylessigsäure, Benzoesäure, Essigsäure, Propionsäure sowie 2-Ethylhexan-, Capryl-, Caprin-, Laurin-, Myristin-, Palmitin- und Stearinsäure.

Auch Zinnoxide und -sulfide sowie -thiolate sind brauchbar. Konkrete Verbindungen sind: Bis(tributylzinn)oxid, Bis(trioctylzinn)oxid, Dibutyl- und Dioctylzinn-bis(2-ethyl-hexylthiolat) Dibutyl- und Dioctylzinndidodecylthiolat, Bis(ß-methoxycarbonyl-ethyl)zinndidodecylthiolat, Bis(ß-acetyl-ethyl)zinn-bis(2-ethyl-hexylthiolat), Dibutyl- und Dioctylzinndidodecylthiolat, Butyl- und Octylzinn-tris(thioglykolsäure-2-ethylhexoat), Dibutyl- und Dioctylzinn- bis(thioglykolsäure-2-ethylhexoat), Tributyl- und Trioctylzinn(thioglykolsäure-2-ethylhexoat) sowie Butyl- und Octylzinntris(thioethylenglykol-2-ethylhexoat), Dibutyl- und Dioctylzinn-bis(thioethylenglykol-2-ethylhexoat), Tributyl- und Trioctylzinn(thioethylenglykol-2- ethylhexoat) mit der allgemeinen Formel Rₙ₊₁Sn(SCH₂CH₂OCOC₈H₁₇)_{3-n,} wobei R eine Alkylgruppe mit 4 bis 8 C-Atomen ist, Bis(ßmethoxycarbonyl-ethyl)zinn-bis(thioethylenglykol-2-ethylhexoat), Bis(ß-methoxycarbonyl-ethyl)-zinn-bis(thioglykolsäure-2-ethylhexoat), und Bis(ß-acetyl-ethyl)zinn- bis(thioethy-lenglykol-2-ethylhexoat) und Bis(ß-acetyl-ethyl)zinn-bis(thioglykolsäure-2-ethylhexoat.

Als Bismut-organische Verbindungen werden insbesondere Bismut-Carboxylate eingesetzt, wobei die Carbonsäuren 2 bis 20 C-Atome, bevorzugt 4 bis 14 C-Atome, besitzen. Als Säuren seien ausdrücklich genannt: Buttersäure, Capronsäure, Caprylsäure, Caprinsäure, Laurinsäure, Myristinsäure, Palmitinsäure, Stearinsäure, Arachinsäure, Isobuttersäure sowie 2-Ethylhexansäure. Es können auch Mischungen von Bismutcarboxylaten mit anderen Metallcarboxylaten, beispielsweise Zinncarboxylaten eingesetzt werden.

Bevorzugt ist die Verwendung von Katalysatoren bei der Herstellung der erfindungswesentlichen Prepolymere, wobei besonders bevorzugt metallorganische Verbindungen eingesetzt werden. Dadurch lassen sich Prepolymere mit besonders niedrigem Restgehalt an freiem MDI-Monomer bei gleichzeitig niedriger Viskosität herstellen.

Falls Katalysatoren mit verwendet werden beträgt deren Menge bezogen auf die Gesamtmenge der umzusetzenden Komponenten A) und B) 0,01 bis 8 Gew.-%, bevorzugt 0,1 bis 5 Gew.-%.

Bevorzugte metallorganische Katalysatoren sind solche aus der Gruppe der Zinn(IV)-Verbindungen.

Bevorzugte Katalysatoren aus der Gruppe der Zinn(IV)-Verbindungen sind Dibutyl- und Dioctylzinndiacetat, -maleat, -bis-(2-ethylhexoat), -dilaurat, -dichlorid, -bisdodecylmercaptid, Tributylzinnacetat, Bis(ß-methoxycarbonyl-ethyl)zinndilaurat und Bis(ß-acetyl-ethyl)zinndilaurat.

Ganz besonders bevorzugt ist Dibutylzinndilaurat als metallorganischer Katalysator.

Zum Abstoppen der Reaktion kann gegebenenfalls eine mineralische oder organische Säure wie Salzsäure, Schwefelsäure, Phosphorsäure oder deren Derivate, Ameisensäure, Essigsäure oder einer anderen Alkan- oder organischen Säure oder einer säurefreisetzenden Komponente, wie etwa Säurehalogenide zugegeben werden. Beispiele für geeignete Säurechloride sind Ameisensäurechlorid, Essigsäurechlorid, Propionsäurechlorid und Benzoylchlorid. Das Abstoppen der Reaktion ist insbesondere vorteilhaft, wenn während der Prepolymerherstellung einer der oben genannten bekannten aminischen oder metallorganischen Katalysatoren mitverwendet wurde.

Bevorzugt ist der Einsatz von Benzoylchlorid als Stopper.

Die erfindungsgemäß erhältlichen Produkte weisen bevorzugt Restmonomergehalte an Methylendiphenyldiisocyanaten von weniger als 0,3 Gew.-%, besonders bevorzugt weniger als 0,15 Gew.% bezogen auf das lösemittelfreie NCO-funktionelle Prepolymer auf.

Die erfindungsgemäß erhältlichen Prepolymere weisen in lösemittelfreier Form Scherviskositäten gemessen bei 23°C von bevorzugt 5000 - 80000 mPa·s, besonders bevorzugt 5000 - 70000 mPa·s auf.

Ein weiterer Gegenstand der Erfindung sind Polyurethankunststoffe, Beschichtungen, Verklebungen und/oder Dichtungen hergestellt unter Verwendung der erfindungsgemäß erhältlichen Prepolymere, wobei feuchtigkeitshärtende Dicht- und/oder Klebstoffe auf Basis der erfindungswesentlichen Prepolymere bevorzugt sind.

Die daraus erhältlichen feuchtigkeitsgehärteten Dicht- und/oder Klebstoffe weisen typischerweise Reißdehnungen nach DIN 53 504 von > 100 %, bevorzugt > 200 %, besonders bevorzugt > 300 % auf.

Zur Herstellung solcher feuchtigkeitshärtenden Dicht- und/oder Klebstoffe können die erfindungsgemäßen NCO-gruppenaufweisenden Polyurethanprepolymere zusammen mit üblichen Weichmachern, Füllstoffen, Pigmenten, Trockenmitteln, Additiven, Lichtschutzmitteln, Antioxidantien, Thixotropiermitteln, Katalysatoren, Haftvermittlern und gegebenenfalls weiteren Hilfs- und Zusatzstoffen nach bekannten Verfahren der Dichtstoffherstellung formuliert werden.

Als geeignete Füllstoffe seien beispielhaft Ruß, Fällungskieselsäuren, pyrogene Kieselsäuren, mineralische Kreiden und Fällungskreiden genannt.

Als geeignete Weichmacher seien beispielhaft Phthalsäureester, Adipinsäureester, Alkylsulfonsäureester des Phenols oder Phosphorsäureester genannt.

Als Thixotropiermittel seien beispielhaft pyrogene Kieselsäuren, Polyamide, hydrierte Rizinusöl-Folgeprodukte oder auch Polyvinylchlorid genannt.

Als Katalysatoren zur Beschleunigung der Aushärtung eignen sich beispielsweise tertiäre Amine, die nicht in die Prepolymerkette eingebaut werden wie Diazabicyclooctan (Dabco), Triethylamin, Dimethylbenzylamin (Desmorapid® DB, Bayer MaterialScience AG, Leverkusen, DE), Bisdimethylaminoethylether, Tetramethylguanidin, Bis-dimethylaminomethyl-phenol, 2,2'-Dimorpholinodiethylether, 2-(2-Dimethylaminoethoxy)ethanol, 2-Dimethylaminoethyl-3-dimethylaminopropylether, Bis-(2-dimethylaminoethyl)ether, N,N-Dimethylpiperazin, N-(2-hydroxyethoxyethyl)-2-azanorboran, N,N,N',N'-Tetramethylbutan-1,3-diamin, N,N,N',N'-Tetramethylpropan-1,3-diamin oder NN,N',N'-Tetramethylhexan-1,6-diamin oder beliebige Gemische mehreren der genannten Verbindungen.

Die Katalysatoren können auch in oligomerisierter oder polymerisierter Form vorliegen, z.B. als N-methyliertes Polyethylenimin.

Als Katalysatoren geeignet sind darüber hinaus 1-Methylimidazol, 2-Methyl-1-vinylimidazol, 1-Allylimidazol, 1-Phenylimidazol, 1,2,4,5-Tetramethylimidazol, 1-(3-Aminopropyl)imidazol, Pyrimidazol, 4-Dimethylamino-pyridin, 4-Pyrrolidinopyridin, 4-Morpholino-pyridin, 4-Methylpyridin oder N-Dodecyl-2-Methyl-imidazol oder beliebige Gemische mehreren der genannten Verbindungen.

Neben oder anstatt der tertiären Amine können auch metallorganische Verbindungen wie Organozinnverbindungen von Carbonsäuren, starke Basen wie Alkalihydroxide, -alkoholate und -phenolate, z.B. Di-n-Octyl-zinn-mercaptid, Dibutylzinnmaleat, -diacetat, -dilaurat, -dichlorid, -bisdodecylmercaptid, Zinn-II-acetat, -ethylhexoat und -diethylhexoat oder Blei-phenyl-ethyl-dithiocarbaminat in solchen feuchtehärtenden PUR-Dichtstoffen enthalten sein.

Als Trockenmittel seien insbesondere Alkoxysilylverbindungen genannt wie Vinyltrimethoxysilan, Methyltrimethoxysilan, i-Butyltrimethoxysilan, Hexadecyltrimethoxysilan, sowie anorganische Stoffe wie z.B. Calciumoxid (CaO) und Isocyanatgruppen tragende Verbindungen wie z.B. Tosylisocyanat.

Als Haftvermittler werden die bekannten funktionellen Silane eingesetzt wie beispielsweise Aminosilane der vorstehend genannten Art aber auch N-Aminoethyl-3-aminopropyl-trimethoxysilan und/oder N-Aminoethyl-3-aminopropyl-methyl-dimethoxysilan, Epoxysilane und/oder Mercaptosilane.

Dichtstoffe, Klebstoffe und Beschichtungsmassen auf Basis der erfindungsgemäßen NCOgruppenhaltigen feuchtigkeitshärtenden Prepolymere können in vielfältiger Weise eingesetzt werden. Sie werden in breitem Umfang zum Beschichten, Verbinden und Abdichten von Werkstoffen beispielsweise aus Metall, Keramik, Glas, Kunststoff, Holz, Beton und anderen Bausstoffen verwendet.

### Beispiele:

Sofern nicht abweichend vermerkt beziehen sich alle Prozentangaben auf Gewichtsprozent.

Die Viskositäten wurden bei einer Messtemperatur von 23°C mit Hilfe des Rotationsviskosimeters Viskotester VT 550 der Fa. Thermo Haake, Karlsruhe, DE mit dem Messbecher SV und der Messeinrichtung SV DIN 2 bestimmt.

Die Bestimmung des Gehalts an freiem monomerem Diisocyanat erfolgte mittels Gelpermeationschromatographie (GPC). Die Messung wird bei Raumtemperatur durchgeführt. Als Elutionsmittel dient THF, die Flussrate beträgt 1 ml/min und das Injektionsvolumen 50 µl. Als Trennsäulen dienen mit 5 µm Trennmaterial gepackte GPC-Säulen mit einer Porosität von 500 Å, wie sie z.B. von der Fa. MZ-Analysentechnik, Mainz unter der Bezeichnung MZ-Gel SD-plus erhältlich sind. Die Gesamtlänge der Trennsäulen beträgt 120 cm. Als Detektor wird ein Brechungsindex-Detektor eingesetzt.

Die Bestimmung des NCO-Gehalts der Prepolymere bzw. Reaktionsmischungen erfolgte nach DIN EN 1242.

Die Shore A-Härten wurden nach DIN 53505, Zugfestigkeit, Reißdehnung und Spannungswert nach DIN 53504 bestimmt.

### Polyether A:

Polyetherpolyol mit einer nominellen Funktionalität von 3 und einer Hydroxylzahl von 35 mg KOH/g, hergestellt durch Propoxylierung von Glycerin und anschließender Terminierung durch Ethoxylierung. Der Ethylenoxid-Anteil beträgt 13 Gew.% und das Produkt enthält 80 - 85 Mol-% primäre OH-Gruppen.

### Polyether B:

Polyetherpolyol mit einer nominellen Funktionalität von 2 und einer Hydroxylzahl von 28 mg KOH/g, hergestellt durch Propoxylierung von Propylenglykol und anschließende Terminierung durch Ethyoxylierung. Der Ethylenoxid-Anteil beträgt 13 Gew.% und das Produkt enthält 70 - 80 Mol-% primäre OH-Gruppen.

### Polyether C:

Über DMC-Katalyse nach dem Impact®-Verfahren hergestelltes Polypropylenglykol mit einer nominellen Funktionalität von 2 und einer Hydroxylzahl von 28 mg KOH/g (Acclaim® 4200 bei der Bayer MaterialScience AG, Leverkusen, DE).

### Polyether D:

Über DMC-Katalyse nach dem Impact®-Verfahren hergestelltes Polypropylenglykol mit einer nominellen Funktionalität von 3 und einer Hydroxylzahl von 28 mg KOH/g (Acclaim® 6300 bei der Bayer MaterialScience AG, Leverkusen, DE).

### Polyether E:

Polyetherpolyol mit einer nominellen Funktionalität von 2 und einer Hydroxylzahl von 260 mg KOH/g, hergestellt durch Propoxylierung von Propylenglykol.

### Polyether F:

Polyetherpolyol mit einer nominellen Funktionalität von 2 und einer Hydroxylzahl von 147 mg KOH/g, hergestellt durch Propoxylierung von Propylenglykol.

### Diisocyanat I:

Desmodur® 44M (4,4'-Diphenylmethandiisocyanat) Bayer MaterialScience AG, Leverkusen, DE

### Diisocyanat II:

Diphenylmethandiisocyanat mit folgender Isomerenverteilung:

| | |
|---|---|
| 2,4'-Diphenylmethandiisocyanat = | 99,10 % |
| 4,4'-Diphenylmethandiisocyanat = | 0,88 % |
| 2,2'-Diphenylmethandiisocyanat = | 0,02 % |

### Diisocyanat III:

Diphenylmethandiisocyanat mit folgender Isomerenverteilung:

| | |
|---|---|
| 2,4'-Diphenylmethandiisocyanat = | 96,93 % |
| 4,4'-Diphenylmethandiisocyanat = | 3,05 % |
| 2,2'-Diphenylmethandiisocyanat = | 0,02 % |

### Diisocyanat IV:

Diphenylmethandiisocyanat mit folgender Isomerenverteilung:

| | |
|---|---|
| 2,4'-Diphenylmethandiisocyanat = | 99,92 % |
| 4,4'-Diphenylmethandiisocyanat = | 0,04 % |
| 2,2'-Diphenylmethandiisocyanat = | 0,04 % |

### Mesamoll^{®}:

Weichmacher auf Basis eines Alkylsulfonsäureesters des Phenols, Bayer MaterialScience AG, Leverkusen, DE

### DBTL:

Dibutylzinndilaurat, Goldschmidt TIB GmbH, Mannheim, DE unter der Bezeichnung Tegokat® 218.

### Beispiel 1:

In einem heiz- und kühlbaren Glaskolben, der mit einem Rührwerk und einem Tropftrichter versehen war, wurden bei einer Temperatur von 85 °C 266,73 g (1,07 mol) Diisocyanat II aufgeschmolzen. Zum aufgeschmolzenen Diisocyanat wurden unter Rühren zuerst 0,157 g Benzoylchlorid und anschließend eine zuvor bei einer Temperatur von 100°C und einem Vakuum von 15 mbar entwässerte Mischung aus 1160,25 g (0,29 mol) Polyether B und 556,87 g (0,116 mol) Polyether A so zugegeben, dass die Temperatur von 85°C konstant blieb. Danach wurde die Reaktionsmischung bei 85°C weitergerührt, bis nach einer Reaktionszeit von 12 Stunden ein konstanter NCO-Gehalt von 2,51 % (Theorie: 2,56 %) erreicht wurde. Danach wurde die Temperatur auf 50°C abgesenkt und 15,99 g Toluolsulfonylisocyanat zugegeben, für 15 Minuten weitergerührt und das Produkt dann abgefüllt. Das Endprodukt wies einen NCO-Gehalt von 2,52 % auf.

### Beispiel 2:

In einem heiz- und kühlbaren Glaskolben, der mit einem Rührwerk und einem Tropftrichter versehen war, wurden bei einer Temperatur von 50°C 298,75 g (1,195 mol) Diisocyanat II aufgeschmolzen. Zum aufgeschmolzenen Diisocyanat wurden unter Rühren zuerst 0,12 g Benzoylchlorid und anschließend 1687,85 g (0,352 mol) Polyether A, der zuvor bei einer Temperatur von 100°C und einem Vakuum von 15 mbar entwässerte wurde, so zugegeben, dass die Temperatur von 50°C konstant blieb. Nach der vollständigen Zugabe des Polyethers wird die Reaktionsmischung auf 70°C erwärmt und bei dieser Temperatur weitergerührt, bis nach einer Reaktionszeit von 19 Stunden ein konstanter NCO-Gehalt von 2,81 % (Theorie: 2,83 %) erreicht wurde. Danach wurde die Temperatur auf 60°C abgesenkt, danach zuerst 13,27 g Toluolsulfonylisocyanat und anschließend 497,89 g Mesamoll® zugegeben, für 15 Minuten weitergerührt und das Produkt dann abgefüllt. Das Endprodukt wies einen NCO-Gehalt von 2,24 % auf.

### Beispiel 3:

In einem heiz- und kühlbaren Glaskolben, der mit einem Rührwerk und einem Tropftrichter versehen war, wurden bei einer Temperatur von 50°C 181,94 g (0,728 mol) Diisocyanat II aufgeschmolzen. Zum aufgeschmolzenen Diisocyanat wurde unter Rühren eine, zuvor bei einer Temperatur von 100°C und einem Vakuum von 15 mbar entwässerte, Mischung aus 659 g (0,165 mol) Polyether C und 659 g (0,11 mol) Polyether D so zugegeben, dass die Temperatur von 50°C konstant blieb. Nach der vollständigen Zugabe der Polyethermischung, wurde die Reaktionsmischung auf 70°C erwärmt und bei dieser Temperatur weitergerührt, bis nach einer Reaktionszeit von 20 Stunden ein konstanter NCO-Gehalt von 2,27 % (Theorie: 2,24 %) erreicht wurde. Danach wurde die Temperatur auf 60°C abgesenkt und 10 g Toluolsulfonylisocyanat zugegeben, für 15 Minuten weitergerührt und das Produkt dann abgefüllt. Das Endprodukt wies einen NCO-Gehalt von 2,20 % auf.

### Beispiel 4:

In einem heiz- und kühlbaren Glaskolben, der mit einem Rührwerk und einem Tropftrichter versehen war, wurden bei einer Temperatur von 50°C 151,08 g (0,604 mol) Diisocyanat III aufgeschmolzen. Zum aufgeschmolzenen Diisocyanat wurde unter Rühren zuerst 0,15 g DBTL und anschließend eine, zuvor bei einer Temperatur von 100°C und einem Vakuum von 15 mbar entwässerte, Mischung aus 674,5 g (0,169 mol) Polyether C und 674,5 g (0,112 mol) Polyether D so zugegeben, dass die Temperatur von 50°C nicht ansteigt. Nach der vollständigen Zugabe der Polyethermischung, wird die Reaktionsmischung auf 70°C erwärmt und bei dieser Temperatur weitergerührt, bis nach einer Reaktionszeit von 5 Stunden ein konstanter NCO-Gehalt von 1,44 % (Theorie: 1,50 %) erreicht wird. Danach wird die Temperatur auf 60°C abgesenkt und der Katalysator durch Zugabe von 120 ppm Benzoylchlorid deaktiviert. Danach werden 12 g Toluolsulfonylisocyanat zugegeben, für 15 Minuten weitergerührt und das Produkt dann abgefüllt. Das Endprodukt weist einen NCO-Gehalt von 1,50 % auf.

### Beispiel 5:

In einem heiz- und kühlbaren Glaskolben, der mit einem Rührwerk und einem Tropftrichter versehen war, wurden bei einer Temperatur von 50°C 202,25 g (0,809 mol) Diisocyanat IV aufgeschmolzen. Zum aufgeschmolzenen Diisocyanat wurden unter Rühren zuerst 0,2 g DBTL und anschließend 1797,75 g (0,3 mol) des zuvor bei einer Temperatur von 100 °C und einem Vakuum von 15 mbar entwässerten Polyethers D so zugegeben, dass die Temperatur von 50°C konstant blieb. Nach der vollständigen Zugabe des Polyethers, wurde die Reaktionsmischung auf 70°C erwärmt und bei dieser Temperatur weitergerührt, bis nach einer Reaktionszeit von 3 Stunden ein konstanter NCO-Gehalt von 1,49 % (Theorie: 1,51 %) erreicht wurde. Danach wurde die Temperatur auf 60°C abgesenkt und der Katalysator durch Zugabe von 120 ppm Benzoylchlorid deaktiviert. Danach werden 15,76 g Toluolsulfonylisocyanat zugegeben, für 15 Minuten weitergerührt und das Produkt dann abgefüllt. Das Endprodukt wies einen NCO-Gehalt von 1,49 % auf.

### Beispiel 6:

Herstellung eines Dichtstoff-Prepolymeren in einem zweistufigen Prozess.

### 1. Stufe: Herstellung eines NCO-funktionellen Vorprodukts:

In einem heiz- und kühlbaren Glaskolben, der mit einem Rührwerk und einem Tropftrichter versehen war, wurden bei einer Temperatur von 50°C 395 g (1,58 mol) Diisocyanat IV aufgeschmolzen. Zum aufgeschmolzenen Diisocyanat wurden unter Rühren zuerst 0,14 g DBTL und anschließend 1000 g (0,25 mol) des zuvor bei einer Temperatur von 100°C und einem Vakuum von 15 mbar entwässerten Polyethers C so zugegeben, dass die Temperatur von 50°C konstant blieb. Nach der vollständigen Zugabe des Polyethers, wurde die Reaktionsmischung auf 70°C erwärmt und bei dieser Temperatur weitergerührt, bis nach einer Reaktionszeit von 4 Stunden ein konstanter NCO-Gehalt von 7,58 % (Theorie: 8,0 %) erreicht wurde. Danach wurde das Vorprodukt auf Raumtemperatur abgekühlt und abgefüllt.

### 2. Stufe: Herstellung eines Dichtstoff-Prepolymeren unter Verwendung des zuvor hergestellten Vorprodukts:

In einem heiz- und kühlbaren Glaskolben, der mit einem Rührwerk und einem Tropftrichter versehen war, wurden bei einer Temperatur von 50°C 712,9 g des in der ersten Stufe hergestellten Vorprodukts vorgelegt. Dazu wurden unter Rühren zuerst 0,13 g DBTL und anschließend eine, zuvor bei einer Temperatur von 100°C und einem Vakuum von 15 mbar entwässerte, Mischung aus 387,7 g (0,097 mol) Polyether C und 899,4 g (0,15 mol) Polyether D so zugegeben, dass die Temperatur von 50°C nicht ansteigt. Nach der vollständigen Zugabe der Polyethermischung, wird die Reaktionsmischung auf 70°C erwärmt und bei dieser Temperatur weitergerührt, bis nach einer Reaktionszeit von 3,5 Stunden ein konstanter NCO-Gehalt von 1,26 % (Theorie: 1,50 %) erreicht wird. Danach wird die Temperatur auf 60°C abgesenkt, der Katalysator durch Zugabe von 240 ppm Benzoylchlorid deaktiviert und das Produkt dann abgefüllt. Das Endprodukt weist einen NCO-Gehalt von 1,26 % auf.

### Vergleichsbeispiel 1:

In einem heiz- und kühlbaren Glaskolben, der mit einem Rührwerk und einem Tropftrichter versehen war, wurden bei einer Temperatur von 85°C 133,37 g (0,533 mol) Diisocyanat I aufgeschmolzen. Zum aufgeschmolzenen Diisocyanat wurden unter Rühren zuerst 0,075 g Benzoylchlorid und anschließend eine, zuvor bei einer Temperatur von 100°C und einem Vakuum von 15mbar entwässerte, Mischung aus 580,13 g (0,145 mol) Polyether B und 278,44 g (0,058 mol) Polyether A so zugegeben, dass die Temperatur von 85°C konstant blieb. Danach wurde die Reaktionsmischung bei 85°C weitergerührt, bis nach einer Reaktionszeit von 8 Stunden ein konstanter NCO-Gehalt von 2,48 % (Theorie: 2,56 %) erreicht wurde. Danach wurde die Temperatur auf 50°C abgesenkt und 8 g Toluolsulfonylisocyanat zugegeben, für 15 Minuten weitergerührt und das Produkt dann abgefüllt. Das Endprodukt wies einen NCO-Gehalt von 2,48 % auf.

### Vergleichsbeispiel 2:

In einem heiz- und kühlbaren Glaskolben, der mit einem Rührwerk und einem Tropftrichter versehen war, wurden bei einer Temperatur von 50°C 149,75 g (0,599 mol) Diisocyanat I aufgeschmolzen. Zum aufgeschmolzenen Diisocyanat wurden unter Rühren zuerst 0,06 g Benzoylchlorid und anschließend 843,93 g (0,176 mol) Polyether A, der zuvor bei einer Temperatur von 100°C und einem Vakuum von 15 mbar entwässerte wurde, so zugegeben, dass die Temperatur von 50°C konstant blieb. Nach der vollständigen Zugabe des Polyethers wird die Reaktionsmischung auf 70°C erwärmt und bei dieser Temperatur weitergerührt, bis nach einer Reaktionszeit von 14 Stunden ein konstanter NCO-Gehalt von 2,84 % (Theorie: 2,83 %) erreicht wurde. Danach wurde die Temperatur auf 60°C abgesenkt, 6,64 g Toluolsulfonylisocyanat und anschließend 248,95 g Mesamoll® zugegeben, für 15 Minuten weitergerührt und das Produkt dann abgefüllt. Das Endprodukt wies einen NCO-Gehalt von 2,24 % auf.

### Vergleichsbeispiel 3:

In einem heiz- und kühlbaren Glaskolben, der mit einem Rührwerk und einem Tropftrichter versehen war, wurden bei einer Temperatur von 50°C 181,94 g (0,728 mol) Diisocyanat I aufgeschmolzen. Zum aufgeschmolzenen Diisocyanat wurde unter Rühren eine, zuvor bei einer Temperatur von 100°C und einem Vakuum von 15 mbar entwässerte, Mischung aus 659 g (0,165 mol) Polyether C und 659 g (0,11 mol) Polyether D so zugegeben, dass die Temperatur von 50°C konstant blieb. Nach der vollständigen Zugabe der Polyethermischung, wurde die Reaktionsmischung auf 70 °C erwärmt und bei dieser Temperatur weitergerührt, bis nach einer Reaktionszeit von 15 Stunden ein konstanter NCO-Gehalt von 2,24 % (Theorie: 2,24 %) erreicht wurde. Danach wurde die Temperatur auf 60°C abgesenkt und dann zuerst 10 g Toluolsulfonylisocyanat und anschließend 377,5 g Mesamoll® zugegeben, für 15 Minuten weitergerührt und das Produkt dann abgefüllt. Das Endprodukt wies einen NCO-Gehalt von 1,86 % auf.

### Vergleichsbeispiel 4:

In einem heiz- und kühlbaren Glaskolben, der mit einem Rührwerk und einem Tropftrichter versehen war, wurden bei einer Temperatur von 50°C 40,29 g (0,161 mol) Diisocyanat I aufgeschmolzen. Zum aufgeschmolzenen Diisocyanat wurde unter Rühren zuerst 4 mg DBTL und anschließend eine, zuvor bei einer Temperatur von 100°C und einem Vakuum von 15 mbar entwässerte, Mischung aus 179,86 g (0,045 mol) Polyether C und 179,86 g (0,03 mol) Polyether D so zugegeben, dass die Temperatur von 50°C nicht ansteigt. Nach der vollständigen Zugabe der Polyethermischung, wird die Reaktionsmischung auf 70°C erwärmt und bei dieser Temperatur weitergerührt, bis nach einer Reaktionszeit von 2 Stunden ein konstanter NCO-Gehalt von 1,41 % (Theorie: 1,50 %) erreicht wird. Danach wird die Temperatur auf 60 °C abgesenkt und der Katalysator durch Zugabe von 120 ppm Benzoylchlorid deaktiviert. Danach werden 3,04 g Toluolsulfonylisocyanat zugegeben, für 15 Minuten weitergerührt und das Produkt dann abgefüllt. Das Endprodukt weist einen NCO-Gehalt von 1,41 % auf.

### Vergleichsbeispiel 5:

In einem heiz- und kühlbaren Glaskolben, der mit einem Rührwerk und einem Tropftrichter versehen war, wurden bei einer Temperatur von 50°C 40,29 g (0,161 mol) Diisocyanat I aufgeschmolzen. Zum aufgeschmolzenen Diisocyanat wurde unter Rühren eine, zuvor bei einer Temperatur von 100°C und einem Vakuum von 15 mbar entwässerte, Mischung aus 179,86 g (0,045 mol) Polyether C und 179,86 g (0,03 mol) Polyether D so zugegeben, dass die Temperatur von 50°C nicht ansteigt. Nach der vollständigen Zugabe der Polyethermischung, wird die Reaktionsmischung auf 70°C erwärmt und bei dieser Temperatur weitergerührt, bis nach einer Reaktionszeit von 28 Stunden ein konstanter NCO-Gehalt von 1,52 % (Theorie: 1,50 %) erreicht wird. Danach wird die Temperatur auf 60°C abgesenkt und 2,64 g Toluolsulfonylisocyanat zugegeben, für 15 Minuten weitergerührt und das Produkt dann abgefüllt. Das Endprodukt weist einen NCO-Gehalt von 1,52 % auf.

### Vergleichsbeispiel 6:

In einem heiz- und kühlbaren Glaskolben, der mit einem Rührwerk und einem Tropftrichter versehen war, wurden bei einer Temperatur von 70°C 101,7 g (0,407 mol) Diisocyanat IV aufgeschmolzen. Zum aufgeschmolzenen Diisocyanat wurde unter Rühren zuerst 22 mg DBTL und anschließend eine, zuvor bei einer Temperatur von 100°C und einem Vakuum von 15 mbar entwässerte, Mischung aus 94,64 g (0,22 mol) Polyether E und 23,66 g (0,0039 mol) Polyether D so zugegeben, dass die Temperatur von 70°C nicht ansteigt. Nach der vollständigen Zugabe der Polyethermischung, wird die Reaktionsmischung bei dieser Temperatur weitergerührt, bis nach einer Reaktionszeit von 4,5 Stunden ein konstanter NCO-Gehalt von 6,7 % (Theorie: 6,9 %) erreicht wird. Danach wird die Temperatur auf 60°C abgesenkt, der Katalysator durch Zugabe von 33 ppm Benzoylchlorid deaktiviert und das Produkt dann abgefüllt. Das Endprodukt weist einen NCO-Gehalt von 6,7 % auf.

### Vergleichsbeispiel 7:

In einem heiz- und kühlbaren Glaskolben, der mit einem Rührwerk und einem Tropftrichter versehen war, wurden bei einer Temperatur von 70°C 490,09 g (1,96 mol) Diisocyanat IV aufgeschmolzen. Zum aufgeschmolzenen Diisocyanat wurde unter Rühren zuerst 0,15 g DBTL und anschließend eine, zuvor bei einer Temperatur von 100°C und einem Vakuum von 15 mbar entwässerte, Mischung aus 807,95 g (1,105 mol) Polyether F und 201,95 g (0,034 mol) Polyether D so zugegeben, dass die Temperatur von 70 °C nicht ansteigt. Nach der vollständigen Zugabe der Polyethermischung, wird die Reaktionsmischung bei dieser Temperatur weitergerührt, bis nach einer Reaktionszeit von 4,5 Stunden ein konstanter NCO-Gehalt von 4,74 % (Theorie: 4,87 %) erreicht wird. Danach wird die Temperatur auf 60°C abgesenkt, der Katalysator durch Zugabe von 120 ppm Benzoylchlorid deaktiviert und das Produkt dann abgefüllt. Das Endprodukt weist einen NCO-Gehalt von 4,74 % auf.

### Vergleichsbeispiel 8:

In einem heiz- und kühlbaren Glaskolben, der mit einem Rührwerk und einem Tropftrichter versehen war, wurden bei einer Temperatur von 50°C 197,5 g (0,79 mol) Diisocyanat II aufgeschmolzen. Zum aufgeschmolzenen Diisocyanat wurde unter Rühren eine, zuvor bei einer Temperatur von 100°C und einem Vakuum von 15 mbar entwässerte, Mischung aus 1042 g (0,261 mol) Polyether C und 260,5 g (0,0434 mol) Polyether D so zugegeben, dass die Temperatur von 50°C konstant blieb. Nach der vollständigen Zugabe der Polyethermischung, wurde die Reaktionsmischung auf 70°C erwärmt und bei dieser Temperatur weitergerührt, bis nach einer Reaktionszeit von 20 Stunden ein konstanter NCO-Gehalt von 2,57 % (Theorie: 2,61 %) erreicht wurde. Danach wurde die Temperatur auf 60°C abgesenkt und 12 g Toluolsulfonylisocyanat zugegeben, für 15 Minuten weitergerührt und das Produkt dann abgefüllt. Das Endprodukt wies einen NCO-Gehalt von 2,60 % auf.

### Herstellung von Mustern zur Bestimmung der mechanischen Eigenschaften:

In einem Kreuzbalkenkneter wurden 240 g Mesamoll®, 405g Omya BLP 3 (Kalziumcarbonat (Füllstoff), Fa.Omya GmbH, 50968 Köln, DE) sowie 170 g Bindemittel der entsprechenden Beispiele mit 21 g Desmodur® VH 20 (Polyisocyanat-Semiprepolymer auf MDI-Basis, Bayer MaterialScience AG, Leverkusen, DE) und 45 g Wacker HDK N 20 (Pyrogene Kieselsäure, Wacker Chemie GmbH, 81737 München, DE) unter dynamischem Vakuum für 30 Minuten geknetet. Anschließend wurden weitere 100 g des jeweiligen Bindemittels, 5,4 g Dynasylan GLYMO (Glycidyl-3-(trimethoxysilyl)propylether, Degussa AG, 60287 Frankfurt am Main, DE) und 2,7 g Dabco T-12N (Dibutyl-Zinndilaurat, Air Products, 3502 GD Utrecht, NL) zugegeben. Die Mischung wurde für 20 Minuten unter statischem Vakuum geknetet und anschließend durch kurzzeitiges Anlegen eines dynamischen Vakuums entlüftet.

Die so entstandenen Mischungen wurden in Aluminiumkartuschen abgefüllt und am folgenden Tag zu ca. 2 mm dicken Membranen verarbeitet. Die Membranen wurden anschließend für 14 Tage bei Raumtemperatur ausgehärtet.

### Diskussion der Ergebnisse:

Wie anhand der in den Tabellen 1 und 2 zusammengefassten Ergebnisse zu erkennen ist, weisen die auf Basis von reinem 2,4`-MDI hergestellten Prepolymere (Beispiele 1, 2 und 3) im Vergleich zu den auf 4,4'-MDI (Desmodur® 44 M) basierten Produkten (Vergleichsbeispiele 1, 2 und 3) eine auf ca. die Hälfte reduzierte Viskosität auf. Beim Vergleich ist zu beachten, dass Beispiel 3 im Gegensatz zum Vergleichsbeispiel 3 kein Mesamoll enthält. Gleichzeitig änderten sich die mechanischen Eigenschaften der mit den verschiedenen Prepolymeren hergestellten Dichtstoffe nur geringfügig. So wiesen die 2,4'-MDI basierten Dichtstoffe bei vergleichbarem Spannungswert (100 % Modul) und vergleichbarer Shore A-Härte eine geringfügig höhere Reissdehnung auf.

Wählt man ein NCO/OH-Äquivalentverhältnis < 2,0 und setzt während der Prepolymerherstellung zusätzlich z.B. DBTL als Katalysator ein (Beispiel 4), so erhält man ein NCO-gruppenhaltiges Prepolymer, dass im Vergleich zu dem auf 4,4'-MDI (Desmodur® 44 M) basierten Produkt (Vergleichsbeispiele 4 und 5) neben einer drastisch reduzierten Viskosität (Faktor 20 bzw. 3) auch einen Restmonomergehalt < 0,3 % aufweist. Mit einem solchen Prepolymer lassen sich kennzeichnungsfreie feuchtehärtende Dichtstoffe mit Restmonomergehalten < 0,1 % herstellen. Die mechanischen Eigenschaften dieser Dichtstoffe liegen auf ähnlichem Niveau wie die des Beispiels 3, dessen Prepolymer mit der gleichen Polyolmischung aber mit einem NCO/OH-Äquivalentverhältnis > 2,0 und ohne DBTL-Katalyse hergestellt wurde und deshalb einen Restmonomergehalt deutlich über 0,3 % aufweist.

Werden zur Herstellung der Prepolymere Polyolmischungen eingesetzt die zu mehr als 70 Gew.-% aus kurzkettigen Polyethern (Molmassen < 1000 g/mol) bestehen, so werden Produkte erhalten, die entweder bei Raumtemperatur fest sind (Vergleichsbeispiel 6) oder im Vergleich zu den erfmdungsgemäßen Produkten sehr hohe Viskositäten aufweisen (Vergleichsbeispiel 7). Zusätzlich sind die Gehalte an freiem monomerem MDI bei einer Kennzahl von 1,8 und DBTL-Katalyse deutlich größer als 0,3 Gew.-%, während sich bei den erfindungsgemäßen Produkten bei gleicher Kennzahl und DBTL-Katalyse Restmonomergehalte < 0,3 Gew.-% ergeben. Auch die mechanischen Eigenschaften des mit dem Prepolymer aus Vergleichsbeispiel 7 hergestellten Dichtstoffs sind ungenügend. Die Shore A Härte ist gegenüber den aus den erfindungsgemäßen Prepolymeren hergestellten Dichtstoffen deutlich zu hoch, während die Reißdehnung mit nur 21 % für einen Dichtstoff völlig ungenügend ist (die erfindungsgemäßen Dichtstoffe weisen Reißdehnungen zwischen ca. 330 % und ca. 530 % auf). Außerdem zeigt der aus dem Vergleichsbeispiel 7 hergestellte Dichtstoff ein starkes Ausschwitzen des in der Dichtstoffformulierung enthaltenen Weichmachers, wodurch ein stark klebriges Produkt erhalten wird. Die aus den erfindungsgemäßen Prepolymeren hergestellten Dichtstoffe zeigen hingegen kein Ausschwitzen des Weichmachers. Diese Produkte sind nach 1 bis 7 Tagen völlig klebfrei. Dass die schlechten mechanischen Eigenschaften des aus dem Vergleichsbeispiel 7 hergestellten Dichtstoffs nicht auf den hohen Anteil an trifunktionellem Polyether sondern auf den hohen Hartsegmentanteil (bedingt durch den niedermolekularen Polyether) zurückzuführen sind, zeigt das erfindungsgemäße Beispiel 5 das ausschließlich auf einem trifunktionellen Polyether beruht. Mit dem Prepolymer aus Beispiel 5 lassen sich Dichtstoffe mit guten mechanischen Eigenschaften formulieren. Prepolymere zu deren Herstellung Polyolmischungen eingesetzt werden, die zu mehr als 70 Gew.-% aus kurzkettigen Polyethern (Molmassen < 1000 g/mol) bestehen sind also zur Formulierung von Dichtstoffen ungeeignet.

**Tabelle 1: Viskositätsvergleiche bei 23°C in mPa·s**

| **Bindemittel** | **Viskosität** | **Restmonomergehalt** |
|---|---|---|
| Beispiel 1 | 9 740 mPa·s | 3,1 Gew.% |
| Beispiel 2 | 9 785 mPa·s | 2,7 Gew.% |
| Beispiel 3 | 14 225 mPa·s | 2,1 Gew.% |
| Beispiel 4 | 24 800 mPa·s | 0,1 Gew.% |
| Beispiel 5 | 66 300 mPa·s | < 0,1 Gew.% |
| Beispiel 6, 1. Stufe | 3 410 mPa·s | 17,6 Gew.-% |
| Beispiel 6, 2. Stufe | 66 500 mPa·s | < 0,1 Gew.% |
| Vergleichsbeispiel 1 | 23 600 mPa·s | 3,7 Gew.-% |
| Vergleichsbeispiel 2 | 23 650 mPa·s | 3,1 Gew.% |
| Vergleichsbeispiel 3 (vor Mesamollzugabe) | 38 200 mPa·s | nicht bestimmt |
| Vergleichsbeispiel 3 (nach Mesamollzugabe) | 18 525 mPa·s | 2,3 Gew.-% |
| Vergleichsbeispiel 4 | 496 000 mPa·s | 1,4 Gew.% |
| Vergleichsbeispiel 5 | 76 800 mPa·s | 1,4 Gew.-% |
| Vergleichsbeispiel 6 | nicht messbar (>> 10⁶ mPa·s) | 0,8 Gew.% |
| Vergleichsbeispiel 7 | 135 000 mPa·s | 0,5 Gew.-% |
| Vergleichsbeispiel 8 | 11 300 mPa·s | 2,6 Gew.-% |

**Tabelle 2: Vergleich der mechanischen Eigenschaften**

| **Formulierung basierend auf:** | **Shore A** | **Zugfestigkeit [N/mm²**] | **Reissdehnung [%]** | **Spannungswert 100 % [N/mm²]** |
|---|---|---|---|---|
| **Beispiel 1** | 42 | 1,4 | 533 | 0,8 |
| **Beispiel 2** | 54 | 2,7 | 343 | 1,2 |
| **Beispiel 3** | 53 | 2,6 | 646 | 1,2 |
| **Beispiel 4** | 49 | 2,3 | 610 | 1,1 |
| **Beispiel 5** | 56 | 2,8 | 330 | 1,2 |
| **Beispiel 6, 2. Stufe** | 52 | 3,7 | 606 | 1,0 |
| **Vergleich 1** | 45 | 1,2 | 458 | 0,8 |
| **Vergleich 2** | 54 | 2,1 | 248 | 1,2 |
| **Vergleich 3** | 51 | 3,5 | 626 | 1,1 |
| **Vergleich 7** | 82 | 2,5 | 21 | nicht messbar |
| **Vergleich 8** | 53 | 1,2 | 70 | nicht messbar |

## Patentansprüche

1. Verfahren zur Herstellung von carbonsäureestergruppenfreien MDI-basierten Prepolymeren mit Scherviskositäten von < 100 000 mPa·s bei 23°C, durch umsetzung von
A) einem Isocyanat, welches ein MDI-Typ mit wenigstens 95 Gew.-% 2,4'-MDI ist, mit
B) einer Polyetherpolyolmischung aus
b1) wenigstens einem Polyetherpolyol eines zahlenmittleren Molekulargewichts Mₙ von 2000 bis 20000 g/mol und einer mittleren OH-Funktionalität von 3 bis 8 und
b2) gegebenenfalls weiteren Polyetherpolyolen mit zahlenmittleren Molekulargewichten größer 2000 g/mol
wobei der Anteil von b1) an B) wenigstens 30 Gew.-% beträgt und B) so aus b1) und b2) zusammengesetzt ist, dass eine Gesamtfunktionalität bezogen auf OH-Gruppen von > 2 und ein zahlenmittleres Molekulargewicht Mₙ von 3000 bis 20000 g/mol resultiert.

2. Verfahren zur Herstellung von carbonsäureestergruppenfreien MDI-basierten Prepolymeren gemäß Anspruch 1, **dadurch gekennzeichnet, dass** das NCO/OH-Verhältnis 1,4-1,9 beträgt.

3. Verfahren zur Herstellung von carbonsäureestergruppenfreien MDI-basierten Prepolymeren gemäß Anspruch 1 oder 2, **dadurch gekennzeichnet, dass** in A) als Isocyanat ausschließlich solche der Diphenylmethandiisocyanat-Reihe mit einem Gehalt an 2,4'-MDI von mindestens 97,5 Gew.-% und einem Gehalt an 2,2'-MDI von höchstens 0,25 Gew.-% eingesetzt werden.

4. Verfahren zur Herstellung von carbonsäureestergruppenfreien MDI-basierten Prepolymeren gemäß einem der Ansprüche 1 bis 3, **dadurch gekennzeichnet, dass** in b1) ausschließlich Polyetherpolyole mit zahlenmittleren Molekulargewichten von 2000 bis 15000 g/mol und mittleren OH-Funktionalitäten vom 3 bis 4 eingesetzt werden.

5. Verfahren zur Herstellung von carbonsäureestergruppenfreien MDI-basierten Prepolymeren gemäß einem der Ansprüche 1 bis 4, **dadurch gekennzeichnet, dass** in b2) ausschließlich difunktionelle Polyetherpolyole mit zahlenmittleren Molekulargewichten von 2000 bis 18000 g/mol eingesetzt werden.

6. Verfahren zur Herstellung von carbonsäureestergruppenfreien MDI-basierten Prepolymeren gemäß einem der Ansprüche 1 bis 5, **dadurch gekennzeichnet**, in b1) und b2) ausschließlich Polyetherpolyole mit Ethylenoxidanteilen von 0 bis 15 Gew.-% eingesetzt werden.

7. Carbonsäureestergruppenfreie MDI-basierte Prepolymere erhältlich nach einem Verfahren gemäß einem der Ansprüche 1 - 6.

8. Carbonsäureestergruppenfreie MDI-basierte Prepolymere gemäß Anspruch 7, **dadurch gekennzeichnet, dass** sie in lösemittelfreier Form Restmonomergehalte an Methylendiphenyldiisocyanaten von weniger als 0,15 Gew.-% und Scherviskositäten von 5000 - 70000 mPa·s bei 23°C aufweisen.

9. Verwendung der carbonsäureestergruppenfreien MDI-basierten Prepolymere gemäß Anspruch 7 oder 8 zur Herstellung von feuchtigkeitshärtenden Kleb- und/oder Dichtstoffen.

## Claims

1. A process for the production of MDI-based prepolymers which are free from carboxylic ester groups, having shear viscosities of < 100 000 mPa·s at 23°C, by reaction of
A) an isocyanate, which is an MDI type with at least 95 wt.% 2,4'-MDI, with
B) a polyether polyol mixture of
b1) at least one polyether polyol with a number average molecular weight Mₙ of 2000 to 20000 g/mol and an average OH functionality of 3 to 8 and
b2) optionally other polyether polyols with number average molecular weights greater than 2000 g/mol
wherein the proportion of b1) in B) is at least 30 wt.% and B) is composed of b1) and b2) in such a way as to result in an overall functionality based on OH groups of > 2 and a number average molecular weight Mₙ of 3000 to 20000 g/mol.

2. The process for the production of MDI-based prepolymers which are free from carboxylic ester groups according to claim 1, **characterised in that** the NCO/OH ratio is 1.4 - 1.9.

3. The process for the production of MDI-based prepolymers which are free from carboxylic ester groups according to claim 1 or 2, **characterised in that** as the isocyanate in A), exclusively those of the diphenylmethane diisocyanate series with a content of 2,4'-MDI of at least 97.5 wt.% and a content of 2,2'-MDI of no more than 0.25 wt.% are used.

4. The process for the production of MDI-based prepolymers which are free from carboxylic ester groups according to one of claims 1 to 3, **characterised in that** in b1), exclusively polyether polyols with number average molecular weights of 2000 to 15000 g/mol and average OH functionalities of 3 to 4 are used.

5. The process for the production of MDI-based prepolymers which are free from carboxylic ester groups according to one of claims 1 to 4, **characterised in that** in b2), exclusively bifunctional polyether polyols with number average molecular weights of 2000 to 18000 g/mol are used.

6. The process for the production of MDI-based prepolymers which are free from carboxylic ester groups according to one of claims 1 to 5, **characterised in that** in b1) and b2), exclusively polyether polyols with ethylene oxide proportions of 0 to 15 wt.% are used.

7. MDI-based prepolymers which are free from carboxylic ester groups obtainable by a process according to one of claims 1 - 6.

8. MDI-based prepolymers which are free from carboxylic ester groups according to claim 7, **characterised in that**, in solvent-free form, they have residual monomer contents of methylene diphenyl diisocyanates of less than 0.15 wt.% and shear viscosities of 5000 - 70000 mPa·s at 23°C.

9. Use of the MDI-based prepolymers which are free from carboxylic ester groups according to claim 7 or 8 for the production of moisture-curing adhesives and/or sealants.

## Revendications

1. Procédé de préparation de prépolymères à base de MDI exempts de groupes esters carboxyliques et présentant une viscosité transversale inférieure à 100 000 mPa.s à 23 °C, par mise en réaction
A) d'un isocyanate qui est un type MDI comportant au moins 95 % en poids de 2,4'-MDI avec
B) un mélange de polyétherpolyols constitué
b1) d'au moins un polyétherpolyol possédant un poids moléculaire moyen en nombre Mₙ compris entre 2 000 et 20 000 g/mol et une fonctionnalité OH moyenne comprise entre 3 et 8 et
b2) le cas échéant, d'autres polyétherpolyols possédant un poids moléculaire moyen en nombre supérieur à 2 000 g/mol,
la proportion de b1) dans B) atteignant au moins 30 % en poids et B) étant composé de b1) et de b2) de telle manière qu'il en résulte une fonctionnalité globale par rapport aux groupes OH qui est supérieure à 2 et un poids moléculaire moyen en nombre Mₙ qui est compris entre 3 000 et 20 000 g/mol.

2. Procédé de préparation de prépolymères à base de MDI exempts de groupes esters carboxyliques, selon la revendication 1, **caractérisé en ce que** le rapport NCO/OH est compris entre 1,4 et 1,9.

3. Procédé de préparation de prépolymères à base de MDI exempts de groupes esters carboxyliques, selon la revendication 1 ou 2, **caractérisé en ce que** dans A) sont mis en oeuvre comme isocyanate exclusivement ceux de la série du diphénylméthanediisocyanate présentant une proportion de 2,4'-MDI d'au moins 97,5 % en poids et une proportion de 2,2'-MDI ne dépassant pas 0,25 % en poids.

4. Procédé de préparation de prépolymères à base de MDI exempts de groupes esters carboxyliques, selon une des revendications 1 à 3, **caractérisé en ce que** dans b1) sont mis en oeuvre exclusivement des polyétherpolyols possédant un poids moléculaire moyen en nombre compris entre 2 000 et 15 000 g/mol et une fonctionnalité OH moyenne comprise entre 3 et 4.

5. Procédé de préparation de prépolymères à base de MDI exempts de groupes esters carboxyliques, selon une des revendications 1 à 4, **caractérisé en ce que** dans b2) sont mis en oeuvre exclusivement des polyétherpolyols difonctionnels possédant un poids moléculaire moyen en nombre compris entre 2 000 et 18 000 g/mol.

6. Procédé de préparation de prépolymères à base de MDI exempts de groupes esters carboxyliques, selon une des revendications 1 à 5, **caractérisé en ce que** dans b1) et b2) sont mis en oeuvre exclusivement des polyétherpolyols comportant des proportions d'oxyde d'éthylène comprises entre 0 et 15 % en poids.

7. Prépolymères à base de MDI exempts de groupes esters carboxyliques, pouvant être obtenus par un procédé selon une des revendications 1 à 6.

8. Prépolymères à base de MDI exempts de groupes esters carboxyliques selon la revendication 7, **caractérisés en ce qu'**ils présentent sous forme exempte de solvant des proportions résiduelles de monomères de méthylènediphényldiisocyanates qui sont inférieures à 0,15 % en poids et une viscosité transversale qui est comprise entre 5 000 et 70 000 mPa.s à 23 °C.

9. Utilisation des prépolymères à base de MDI exempts de groupes esters carboxyliques selon la revendication 7 ou 8 pour la production d'adhésifs et/ou de matériaux d'étanchéité durcissant à l'humidité.
